# EUROPÄISCHE PATENTSCHRIFT

(11) **EP 1 319 968 B1**
(45) Veröffentlichungstag und Bekanntmachung des Hinweises auf die Patenterteilung: **13.08.2008**
(21) Anmeldenummer: 02102539.0
(22) Anmeldetag: 06.11.2002
(51) Int. Cl.: G02B 21/02, G02B 21/24, G02B 21/00, G02B 7/10, G02B 7/02

(54) **Mikroskopobjektiv mit motorisch verschiebbaren Linsen, Mikroskop und Verfahren zum Abbilden einer Probe**
Microscopic objective with motor-driven lenses, microscope and method for imaging a sample
Objectif pour microscope avec des lentilles déplaçables à moteur, microscope et méthode d'imagerie d'un échantillon

(30) Priorität: 03.12.2001 DE 10159239
(43) Veröffentlichungstag der Anmeldung: 18.06.2003
(73) Patentinhaber: Leica Microsystems CMS GmbH, 35578 Wetzlar (DE)
(72) Erfinder: Engelhardt, Johann, Dr., 76669, Bad Schönborn (DE)
(74) Vertreter: Stamer, Harald

(56) Entgegenhaltungen:
- DE-A- 19 541 237
- DE-A- 19 651 667
- DE-A- 19 822 256
- GB-A- 889 884
- US-A- 5 939 719
- PATENT ABSTRACTS OF JAPAN Bd. 1996, Nr. 04, 30. April 1996 (1996-04-30) -& JP 07 333480 A (OLYMPUS OPTICAL CO LTD), 22. Dezember 1995 (1995-12-22)
- PATENT ABSTRACTS OF JAPAN Bd. 2000, Nr. 10, 17. November 2000 (2000-11-17) & JP 2000 187146 A (CANON INC), 4. Juli 2000 (2000-07-04)

## Beschreibung

Die Erfindung betrifft ein Scannmikroskop mit einem Mikroskopobjektiv, das ein Objektivgehäuse aufweist und mehrere Linsen beinhaltet.

Darüber hinaus betrifft die Erfindung ein Verfahren zum Abbilden einer Probe mit Hilfe eines Scannmikroskops.

In der Mikroskopie ist es üblich, die Probe bzw. den Bereich der Probe, der scharf abgebildet werden soll, in die Fokusebene eines Objektivs zu bringen. Hierzu kann die Probe, die meist auf einem Probentisch gelagert ist, oder das Objektiv entlang der optischen Achse verschoben werden. Viele Mikroskope sind mit Objektivrevolvem ausgerüstet, in denen mehrere unterschiedliche Objektive bevorratet werden können. Oft ist der gesamte Revolver zur Fokussierung verschiebbar gelagert. Um ein automatisches Fokussieren zu ermöglichen, sind die verschiedenen Systeme mit Motoren zum Verschieben des Objektiv, bzw. des Revolvers oder des Probentisches ausgerüstet.

Es sind Mikroskopobjektiv-Positioniersysteme bekannt, die zwischen dem Objektivrevolver und dem Objektiv angeordnet sind. Mit diesen Mikroskopobjektiv-Positioniersystemen ist es ermöglicht, das Objektiv in Richtung der optischen Achse relativ zum Revolver zu verschieben. Die Firma Physik Instrumente bietet beispielsweise solche piezogesteuerten Systeme kommerziell an.

In der Deutschen Offenlegungsschrift 43 23 721 A1 ist ein Mikroskopobjektiv offenbart, das wenigstens eine Korrekturfassung zum Ausgleich unterschiedlicher Deckglasdicken aufweist. Die Korrekturfassung ist axial verschiebbar und gleichzeitig um die optische Achse des Objektivs drehbar. Dadurch werden Verklemmungen der Korrekturfassung vermieden.

Die Deutsche Offenlegungsschrift DE 37 35 324 offenbart ein Mikroskopobjektiv mit Korrekturfassung insbesondere für unterschiedlich dicke planparallele Platten im Objektraum, wobei eine Frontlinse und eine hintere Linsengruppe an der Abbildungsseite eines veränderlichen Luftabstandes angeordnet sind. Die Korrekturfassung ist so ausgebildet, dass gleichzeitig mit der Veränderung des Luftabstandes zur Bildfehlerkorrektur eine axiale Verschiebung des gesamten optischen Systems zur Korrektur der Lage der Schärfenebene vorgenommen wird.

Die amerikanische Patentschrift 4,796,974 offenbart eine Vorrichtung zum Fokussieren elektromagnetischer Wellen. Die Vorrichtung beinhaltet einen in drei senkrecht zueinander stehende Richtungen beweglichen Halter. Antriebseinheiten zum Bewegen des Halters in den drei Richtungen sind vorgesehen. Die Vorrichtung kann in einem Mikroskop und in einem konfokalen Rastermikroskop verwendet werden.

In der Scanmikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet.

Ein konfokales Rastermikroskop umfasst im allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt, wobei die Bahn des Abtastlichtstrahles auf bzw. in dem Objekt idealer Weise einen Mäander beschreibt. (Abtasten einer Zeile in x-Richtung bei konstanter y-Position, anschließend x-Abtastung anhalten und per y-Verstellung auf die nächste abzutastende Zeile schwenken und dann bei konstanter y-Position diese Zeile in negative x-Richtung abtasten u.s.w.). Um eine schichtweise Bilddatennahme zu ermöglichen, wird der Probentisch oder das Objektiv nach dem Abtasten einer Schicht verschoben und so die nächste abzutastende Schicht in die Fokusebene des Objektivs gebracht.

Aus der Deutschen Offenlegungsschrift DE 196 50 392 A1 ist ein Feinfokussiertisch für Mikroskope, mit einer Objektplatte, einer Halterung für die Objektplatte und einer die Objektplatte in ihrer horizontalen Lage verändernden Verstelleinrichtung bekannt. Der Feinfokussiertisch ist zur Realisierung eines Parallelhubs der Objektplatte bei einfacher Konstruktion derart ausgebildet, dass die Halterung einen Montagebereich, vorzugsweise zum Befestigen auf einem Objekttisch oder am Mikroskop, und einen Verbindungsbereich (5) zur Objektplatte hin umfasst und dass sich zwischen dem Montagebereich und dem Verbindungsbereich über Biegestellen angelenkte Parallelarme erstrecken.

Aus der Deutschen Offenlegungsschrift DE 199 24 709 A1 ist eine Vorrichtung zur Feinpositionierung eines Bauteils, insbesondere zur vertikalen Feinpositionierung eines Objektivs oder eines Objektivrevolvers, mit einer Hebelanordnung und einem Antrieb für die Hebelanordnung bekannt. Die Vorrichtung ist **dadurch gekennzeichnet, dass** die Hebelanordnung unmittelbar auf ein Drehteil wirkt, dass das Bauteil mit dem Drehteil flexibel verbunden ist und dass die Verbindung im Sinne einer mit Drehung des Drehteils die Position des Bauteils durch Abrollen der flexiblen Verbindung auf dem Drehteil verändernde und dabei eine Hubbewegung des Bauteils hervorrufende Aufhängung für das Bauteil bewirkt.

Aus der Deutschen Offenlegungsschrift DE 31 05 018 A1 ist ein Operationsmikroskop mit einem Objektiv bekannt. Das Objektiv beinhaltet zwei Glieder, von denen eines zur Veränderung der Schnittweite verschiebbar ist.

Aus der Deutschen Offenlegungsschrift DE 198 22 256 A1 ist eine Anordnung zur direkten Steuerung der Bewegung eines Zoomsystems in einem Stereomikroskop, bestehend aus direkten motorischen Antrieben für mindestens eine bewegte Linsengruppe, vorzugsweise mit zwei voneinander unabhängig ansteuerbaren Linsengliedern, wobei die Linsenglieder als Linsenpaare in einem Greenough-Stereomikroskop oder Teleskop-Stereomikroskop vorgesehen sind.

Das U. S. Patent 5,939,719 offenbart ein optisches System für ein AFM. Dabei wird die Bewegung der Abtastnadel des AFM mit zwei optischen Strahlengängen gemessen und überwacht. Jeder der Strahlengänge liefert über eine Zoomlinse ein Bild auf einem CCD. Das System offenbart keine Hülse mit einzelnen Linsen, die innerhalb eines Objektivs bewegt werden können.

Die Japanische Patentanmeldung JP7333480 offenbart ein System, bei dem Linsen oder Linsengruppen in einer Halterung montiert sind und wobei jede Halterung über einen Aktuator in Richtung der optischen Achse bewegbar ist.

Das Britische Patent GB 889,884 offenbart ein Objektiv mit axial bewegbaren Komponenten. Hierzu ist ein Hebelsystem vorgesehen, über das die Bewegungen der Komponenten durchgeführt werden können.

Aus der Deutschen Offenlegungsschrift DE 44 40 758 A1ist eine elektromechanische Positioniereinheit als Trägheitsantrieb zum Positionieren von Objekten mit bis zu atomarer Positionierpräzision und Positionierstrecken bis in den cm-Bereich bekannt. Die Positioniereinheit enthält mindestens einen vorzugsweise rohrförmigen piezoelektrischen Aktuator zum Übertragen von elektrisch kontrollierbaren Trägheitsbewegungen auf einen Läufer. Gegenstand der Erfindung ist ein Läufer, welcher aus mindestens einer Einheit höherer Masse (Masseeinheit) und mindestens einer flexibel biegbaren Einheit (Biegeeinheit) besteht, so dass die Stärke der Reibungshaftung über die Biegeeinheit(en) des Läufers justierbar ist und die Masseeinheit des Läufers für eine hohe Belastbarkeit der Positioniereinheit sorgt. Durch diese Kombination können mit der Positioniereinheit auch schwerere Objekte positioniert werden und für den Einsatz als Werkzeug nötige Kräfte ausgeübt werden.

Aus der US-Patentschrift 5,682,076 ist ein piezoelektrischer Mikromotor für ein Disk-Laufwerk bekannt.

Die bekannten Systeme zum Scannen eine Probe entlang der optischen Achse und zum Fokussieren auf eine Probe haben den Nachteil, dass sie aufgrund der großen bewegten Massen zwangsläufig träge und langsam sind. Die zwischen Revolver und Objektiv angeordneten Vorrichtungen haben darüber hinaus den Nachteil, dass der optische Weg (Tubuslänge) erheblich verlängert ist.

Der Erfindung liegt daher die Aufgabe zugrunde, ein Scanmikroskop mit einem Mikroskopobjektiv anzugeben, das bei kompakter Bauweise eine schnelle Fokussierung oder einen schnelles Abtasten eine Probe in Richtung der optischen Achse (z-Scan) ermöglicht.

Die objektive Aufgabe wird durch ein Scanmikroskop gelöst, das die Merkmale des Anspruchs 1 umfasst.

Es ist weiterhin eine Aufgabe der Erfindung ein Verfahren anzugeben, das ein schnelles Abbilden einer Probe bzw. ein schnelles Abbilden von Bereichen einer Probe mit Hilfe eines Scannmikroskops in einer auswählbaren Abtastebene ermöglicht.

Obige Aufgabe wird durch ein Verfahren gelöst, das die Merkmale des Anspruchs 8 umfasst.

Es ist weiterhin ein Vorteil der Erfindung, dass durch die geringe bewegte Masse sowohl ein schnelles Abscannen einer Probe in z-Richtung (entlang der optischen Achse), als auch ein schnelles Fokussieren ermöglicht ist. Außerdem ist es ein besonderer Vorteil der Erfindung, dass bei der Verwendung eines Revolvers der gesamte Revolver eines Mikroskops verwendbar ist; im Gegensatz zu den Systemen, die zwischen dem Revolver und dem Objektiv angebracht sind und die seitlich so weit ausladen, dass keine weiteren Objektive im Revolver positionierbar sind. Ein weiterer Vorteil der Erfindung ist es, dass ein einfaches Wechseln der Objektive nicht beeinträchtigt ist.

Alle Linsen des Mikroskopobjektivs sind gemeinsam zum Fokussieren verschiebbar angeordnet. Vorzugsweise ist ein Führungselement vorgesehen, das gewährleistet, dass das Verschieben im Wesentlichen entlang der optischen Achse erfolgt.

Es ist eine als Piezomotor ausgeführte Antriebseinheit vorgesehen, die die motorische Verschiebung bewirkt. Ganz besonders kompakt ist eine Ausführungsform, die als Antriebseinheit die aus der bereits erwähnten Deutschen Offenlegungsschrift DE 44 40 758 A1 bekannte elektromechanische Positioniereinheit beinhaltet.

Weiterhin ist eine Feder vorgesehen, die eine Rückstellkraft ausübt, die einer von der Antriebseinheit ausgeübten Kraft entgegengerichtet ist. Hierdurch werden in vorteilhafter Weise die Reproduzierbarkeit erhöht und Ungenauigkeiten beispielsweise durch Gewindespiele kompensiert.

In einer Ausführungsvariante ist ein Positionsdetektor vorgesehen, der die aktuelle Stellung der verschiebbaren Linsen ermittelt. Vorzugsweise erzeugt der Positionsdetektor elektrische Signale, die an ein Steuersystem übergebbar sind. Positionsdetektoren sind weithin bekannt. Nur ganz beispielhaft seinen kapazitive oder optische Entfernungsmesser, Glasmaßstäbe oder der Einsatz von Endschaltern genannt.

Ein Mikroskopobjektiv, das ein Objektivgehäuse aufweist und mehrere Linsen beinhaltet, wobei alle Linsen des Objektivs in einer Hülse innerhalb des Objektivgehäuses zum Fokussieren verschiebbar angeordnet sind, ist erfindungsgemäß in eine Arbeitsposition innerhalb des Mikroskops einbringbar.

In einer anderen Ausführungsvariante ist das gesamte Objektiv oder der gesamte Revolver zur Grobfokussierung in bekannter Weise verschiebbar. In dieser Variante dienen die innerhalb des Objektivgehäuses verschiebbaren Linsen zur Feinfokussierung.

Das Mikroskop beinhaltet vorzugsweise einen Positionsdetektor der die Stellung der mindestens einen Linse erfasst und diese Information an eine Steuerung übermittelt, die die Antriebseinheit steuert. Die Steuerung beinhaltet ein Autofokussystem.

Das Scanmikroskop ist insbesondere als konfokales Scanmikroskop ausgeführt. In einem Scanmikroskop ist das Abscannen in z-Richtung vorzugsweise mit dem Scanmechanismus, der das Abscannen in x-Richtung und in y-Richtung bewirkt, synchronisiert. In einer bevorzugen Ausgestaltung sind Abtast-Schnitte beliebiger räumlicher Lage ermöglicht. Die Synchronisierung kann zusätzlich derart ausgelegt sein, dass Abbildungsfehler der Optiken, insbesondere des Objektivs, wie zum Beispiel der Bildebnungsfehler ausgeglichen sind; indem die Steuerung beispielsweise im Bildrandbereich eine andere z-Positionen einstellt, als in der Bildmitte.

In einer Variante beinhaltet das Verfahren die weiteren Schritte des Auswählens einer weiteren Abtastebene, des Einstellens der weiteren Abtastebene mit dem Mikroskopobjektiv, des Abtastens der Probe innerhalb der eingestellten weiteren Abtastebene und Erzeugen von weiteren Bilddaten und des Erzeugens eines Bildstapels aus den Bilddaten und den weiteren Bilddaten.

In einer Ausführung betrifft das Abtasten einen Bildpunkt. In einer anderen Variante betrifft das Abtasten eine Linie. In einer bevorzugen Ausgestaltung umfasst das Verfahren das Abtasten einer Fläche, wobei die Fläche eine beliebige Stellung im Raum haben kann, vorzugsweise jedoch ein x-y-Schnitt ist. Mit dem erfindungsgernäßen Verfahren ist es vorteilhafter Weise möglich, schnell x-z-Schnitte oder y-z-Schnitte aufzunehmen.

Das Verfahren kann mit einem Scanmikroskop, insbesondere mit einem konfokalen Scanmikroskop, ausgeführt werden.

In einer besonders bevorzugen Ausgestaltung wird der bei vielen herkömmlichen Objektiven bereits vorhandene Schutzmechanismus, bei dem zumindest die Frontlinse oder die gesamte Linsengruppe bei ungewollter Berührung des Objektes gegen eine Federkraft nach hinten wegtaucht in erfindungsgemäßer Weise ausgenutzt, indem eine Antriebseinheit direkt den Schutzmechanismus verschiebt.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein Mikroskopobjektiv in einem Revolver,
- Fig.2: ein weiteres Mikroskopobjektiv in einem Revolver und
- Fig.3: ein konfokales Scanmikroskop.

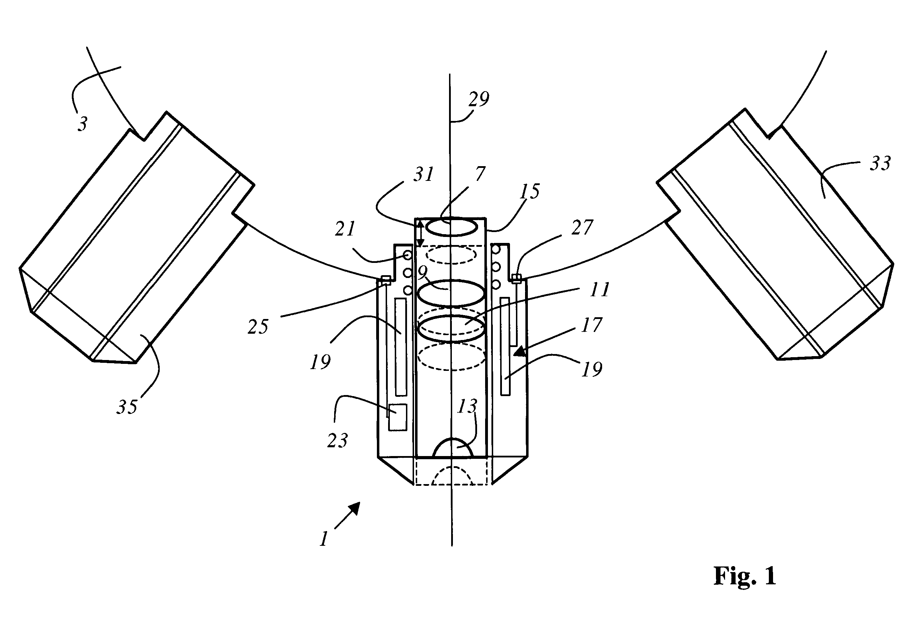

Fig. 1 zeigt ein Mikroskopobjektiv 1, das in einen Revolver 3 eingeschraubt ist. Innerhalb des Mikroskopobjektivs 1, das ein Objektivgehäuse 5 aufweist, sind alle Linsen 7, 9, 11, 13 in einer in Richtung der optischen Achse 29 verschiebbaren Hülse 15 gefasst. Die Verschiebung der Hülse wird von einer Antriebseinheit 17, die innerhalb des Objektivgehäuses angeordnet ist, bewirkt. Die Antriebseinheit 17 ist als Piezomotor 19 ausgeführt. Eine Schraubenfeder 21 drückt die Hülse 15 in eine Endposition, die mit gestrichelt eingezeichnet ist. Die Antriebseinheit 17 übt eine der Federkraft entgegengerichtete Kraft aus, so dass die Schraubenfeder 21 durch Verschieben der Hülse 15 zusammengedrückt wird. In dem Objektivgehäuse 5 ist ein Positionsdetektor 23 eingebaut, der die aktuelle Stellung der Hülse 15 ermittelt und die Information in Form von elektrischen Signalen über die Kontaktstelle 25 zwischen dem Mikroskopobjektiv 1 und dem Revolver 3 an eine nicht eingezeichnete Steuerung übermittelt. Zur Übermittlung von Ansteuersignalen an die Antriebseinheit sind zwischen dem Revolver 3 und dem Mikroskopobjektiv 1 weitere Kontaktstellen 27 vorgesehen. Der Doppelpfeil 31 illustriert die Fokussierbewegung in Richtung der optischen Achse 29. Durch Schwenken des Revolvers 3 ist ein zweites Mikroskopobjektiv 33 oder ein drittes Mikroskopobjektiv 35 in die Arbeitsposition einbringbar, ohne dass es weiterer Umbauten bedarf.

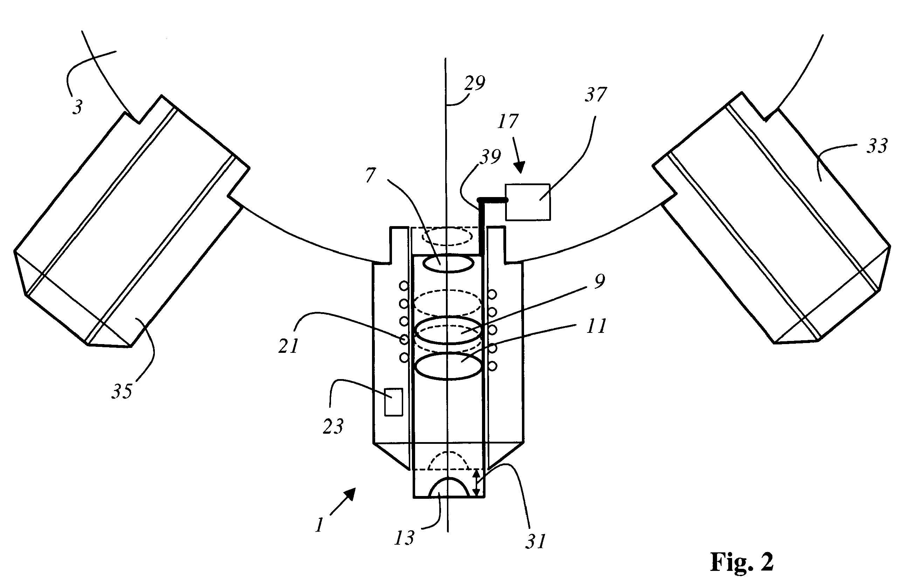

Fig.2 zeigt ein Mikroskopobjektiv 1 in einem Revolver 3. Das Ausführungsbeispiel nach Figur 2 fällt nicht unter den Schutzbereich der geltenden Ansprüche. Bei dieser Ausführung ist eine Antriebseinheit 17, die als Galvanometer 37 ausgeführt ist, im Revolver 3 angeordnet, wobei diese Antriebseinheit 17 die Verschiebung der Hülse 15, in der die Linsen 7. 9. 11, 13 gefasst sind, über eine Druckgestänge 39 bewirkt. Die Antriebseinheit 17 ist derart ausgestaltet, dass sie auch als Antriebseinheit 17 für den Fokussier- bzw. Scanmechanismus des zweiten oder dritten Mikroskopobjektivs 33, 35, fungiert. Eine Schraubenfeder 21 drückt die Hülse 15 in eine Endposition, die gestrichelt eingezeichnet ist. Die Antriebseinheit 17 übt eine der Federkraft entgegengerichtete Kraft aus, so dass die Schraubenfeder 21 durch Verschieben der Hülse 15 auseinander gezogen wird. Analog zu dem in Fig. 1 gezeigten Mikroskopobjektiv 1 ist ein Positionssensor 23 in das Mikroskopobjektiv 1 eingebaut. Es wäre jedoch auch möglich, die Stellung der Hülse aus der Stellung des Druckgestänges abzuleiten. Der Doppelpfeil 31 illustriert die Fokussierbewegung bzw. Scanbewegung in Richtung der optischen Achse 29.

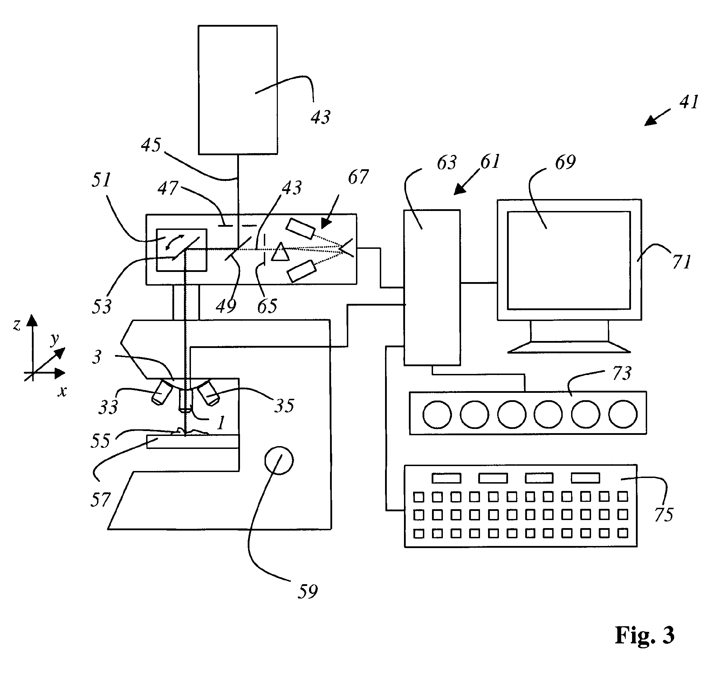

Fig.3 zeigt schematisch ein Mikroskop 41, das als konfokales Scanmikroskop ausgestaltet ist. Das Mikroskop 41 umfasst Laser 43, der einen Beleuchtungslichtstrahl 45 emittiert. Nach dem Passieren einer Anregungsblende 47 wird der Beleuchtungslichtstrahl 45 von einem Strahlteiler 49 zum Scanmodul 51 reflektiert, das einen kardanisch aufgehängten Scanspiegel 53 beinhaltet, der den Beleuchtungslichtstrahl 45 durch mehrere nicht gezeigte Optiken und durch das Mikroskopobjektiv 1 hindurch über bzw. durch eine Probe 55 führt. Das Mikroskopobjektiv 1 ist in einen Revolver 3 eingeschraubt, der ein zweites Mikroskopobjektiv 33 und ein drittes Mikroskopobjektiv 35 in Vorratspositionen trägt. Der Beleuchtungslichtstrahl 45 wird bei nicht transparenten Proben 55 über die Probenoberfläche geführt. Bei biologischen Proben 55 (Präparaten) oder transparenten Proben 55 kann der Beleuchtungslichtstrahl 45 durch die Probe 55 geführt werden. Zur Grobeinstellung der z-Position der Probe 55 ist der Probentisch 57, auf dem die Probe 55 liegt in z-Richtung verschiebbar. Die Verschiebung erfolgt über ein Feingetriebe mechanisch über den Drehknopf 59. Nachdem eine erste x-y-Schnittebene der Probe abgetastet ist, stellt die Steuerung 61, die als PC 63 ausgeführt ist, mit dem Mikroskopobjektiv 1 die nächste abzutastende x-y-Schnittebene ein. Innerhalb des Mikroskopobjektivs 1, sind alle in der Figur nicht gezeigten Linsen in einer in Richtung der optischen Achse verschiebbaren Hülse gefasst. Die Verschiebung der Hülse wird von einer nicht gezeigten Antriebseinheit, die innerhalb des Objektivgehäuses angeordnet ist, bewirkt. Die Antriebseinheit ist als Piezomotor ausgeführt und wird von dem PC 63 gesteuert. Dies bedeutet, dass verschiedene Schnittebenen der Probe 55 nacheinander durch den Fokus des Beleuchtungslichtstrahls 45 abgetastet werden. Die nachträgliche Zusammensetzung ergibt dann je ein dreidimensionales Bild der Probe 55. Das von der Probe 55 ausgehende Zusammensetzung ergibt dann je ein dreidimensionales Bild der Probe 55. Das von der Probe 55 ausgehende Detektionslicht 59 gelangt durch die das Mikroskopobjektiv 1 und die weiteren nicht gezeigten Optiken und das Scanmodul 51 zurück zum Strahlteiler 49, passiert diesen und trifft nach dem passieren der Detektionsblende 65. auf einen Detektor 67, der als Multibanddetektor ausgeführt ist. Das von der Probe 55 ausgehende Detektionslicht 59 ist in der Abbildung mit gestrichelten Linien dargestellt. Im Detektor 67 werden elektrische, zur Leistung des von der Probe 55 ausgehenden Detektionslichtes 59 proportionale Detektionssignale erzeugt und an den PC 63 weitergegeben. Die Detektionssignale werden in der dem PC 63 zu einer Abbildung 69 der Probe 55 zusammengesetzt und in einer Rot-Grün-Darstellung auf einem Display 71 ausgegeben. Zum Auswählen einer Abtastebene bzw. zum Bestimmen eines Abzurasternden Bildstapels ist eine Bedienkonsole 73 mit Drehreglern und eine Tastatur 75 vorgesehen.

### Bezugszeichenliste:

- 1: Mikroskopobjektiv
- 3: Revolver
- 5: Objektivgehäuse
- 7: Linse
- 9: Linse
- 11: Linse
- 13: Linse
- 15: Hülse
- 17: Antriebseinheit
- 19: Piezomotor
- 21: Schraubenfeder
- 23: Positionsdetektor
- 25: Kontaktstelle
- 27: weitere Kontaktstelle
- 29: optische Achse
- 31: Doppelpfeil
- 33: zweites Mikroskopobjektiv
- 35: drittes Mikroskopobjektiv
- 37: Galvanometer
- 39: Druckgestänge
- 41: Mikroskop
- 43: Laser
- 45: Beleuchtungslichtstrahl
- 47: Anregungsblende
- 49: Strahlteiler
- 51: Scanmodul
- 53: Scanspiegel
- 55: Probe
- 57: Probentisch
- 61: Drehknopf
- 63: PC
- 65: Detektionsblende
- 67: Detektor
- 69: Abbildung
- 71: Display
- 73: Bedienkonsole
- 75: Tastatur

## Patentansprüche

1. Scannmikroskop
mit einem Mikroskopobjektiv(1) mit einem Objektivgehäuse (5) das mehrere Linsen (7, 9, 11, 13) beinhaltet, **dadurch gekennzeichnet,**
**dass** alle Linsen (7, 9, 11, 13) des Mikroskopobjektivs (1) in einer einzigen Hülse (15) gefasst sind,
**dass** eine Schraubenfeder (21) vorgesehen ist, die die Hülse (15) entlang einer in z-Richtung verlaufenden optischen Achse (29) in Richtung einer Endposition drückt,
**dass** dem Mikroskopobjektiv (1) eine als Piezomotor (17) ausgebildete Antriebseinheit zugeordnet ist, die die Hülse (15) entgegen der Federkraft der Schraubenfeder (12) relativ zum Objektivgehäuse (5) in Richtung der optischen Achse (29) motorisch verschiebt,
**dass** der Piezomotor (17) innerhalb des Objektivgehäuses (5) des Mikroskopobjektivs (1) angeordnet ist,
**dass** das Scannmikroskop eine Steuerung (61) zum Steuern des Piezomotors (17) aufweist,
**dass** die Steuerung (61) zum Abtasten einer Probe (55) in mehreren x-y-Abtastebenen den Piezomotor (17) zum Antrieb der Hülse (15) in z-Richtung derart steuert, dass eine durch das Scannmikroskop abzutastende x-y-Abtastebene eingestellt ist,
**dass** die Steuerung (61) den Piezomotor (17) zum Antrieb der Hülse (15) in z-Richtung derart steuert, dass nach der Auswahl einer weiteren durch das Scannmikroskop abzutastenden x-y-Abtastebene diese weitere x-y-Abtastebene eingestellt ist, und
**dass** die Steuerung (61) ein Autofokussystem zum Autofokus des Mikroskopobjektivs (1) auf die abzutastende Probe (55) beinhaltet.

2. Scannmikroskop nach Anspruch 1, **dadurch gekennzeichnet, dass** ein Revolver (3) vorgesehen ist, in den das Mikroskopobjektiv (1) eingeschraubt ist.

3. Scannmikroskop nach einem der vorhergehenden Ansprüche, **dadurch gekennzeichnet, dass** ein Positionsdetektor (23) vorgesehen ist, der die aktuelle Stellung der Hülse (15) oder mindestens einer Linse (7, 9, 11, 13) erfasst.

4. Scannmikroskop nach Anspruch 3 in Kombination mit Anspruch 2, **dadurch gekennzeichnet, dass** der Positionsdetektor (23) im Mikroskopobjektiv (1) angeordnet ist und die erfasste Stellung der Hülse (15) oder die erfasste Stellung der Linse (7, 9, 11, 13) über eine Kontaktstelle (25) im Revolver (3) an die Steuerung (61) übermittelt.

5. Scannmikroskop nach einem der vorhergehenden Ansprüche, **dadurch gekennzeichnet, dass** das Abscannen in z-Richtung mit dem Scannmechanismus, der das Abscannen in x-Richtung und in y-Richtung bewirkt, synchronisiert ist.

6. Scannmikroskop nach einem der vorhergehenden Ansprüche, **dadurch gekennzeichnet, dass** die Steuerung (61) beim Abtasten im Bildrandbereich eine andere z-Position einstellt als in der Bildmitte, um Abbildungsfehler des Mikroskopobjektivs (1), vorzugsweise die Bildebnungsfehler des Mikroskopobjektivs (1), auszugleichen.

7. Scannmikroskop nach einem der vorhergehenden Ansprüche, **dadurch gekennzeichnet, dass** das Scannmikroskop ein konfokales Scannmikroskop ist.

8. Verfahren zum Abbilden einer Probe mit Hilfe eines Scannmikroskops, **gekennzeichnet durch** die folgenden Schritte:
- Fokussieren mit Hilfe des Autofokus eines Mikroskopobjektivs (1) auf die Probe (55) unter Verwendung einer ein Autofokussystem umfassenden Steuerung (61), wobei mit Hilfe der Steuerung (61) ein innerhalb des Objektivgehäuses (5) des Mikroskopobjektivs (1) angeordneter Piezomotor (17) zum motorischen Verschieben eines Mikroskopobjektivs (1) angesteuert wird, wobei das Mikroskopobjektiv (1) mit einer einzigen Hülse (15) versehen wird, in der alle Linsen (7, 9, 11, 13) des Mikroskopobjektivs (1) gefasst werden, wobei die Hülse (15) mit Hilfe einer Schraubenfeder (21) entlang einer in z-Richtung verlaufenden optischen Achse (29) in Richtung einer Endposition gedrückt wird; und wobei die Hülse (15) mit Hilfe des Piezomotors (17) entgegen der Federkraft der Schraubenfeder (12) in Richtung der optischen Achse (29) motorisch verschoben wird,
- Auswählen einer x-y-Abtastebene,
- Einstellen der x-y-Abtastebene **durch** die Steuerung (61),
- Abtasten der Probe (55) innerhalb der eingestellten x-y-Abtastebene und Erzeugen von Bilddaten, und
- Einstellen der nächsten x-y-Abtastebene **durch** die Steuerung (61), nachdem das Abtasten der vorherigen x-y-Abtastebene abgeschlossen ist, wobei die die Hülse (15) zum Einstellen der nächsten x-y-Abtastebene mit Hilfe des Piezomotors (17) in z-Richtung verschoben wird.

9. Verfahren nach Anspruch 8, **dadurch gekennzeichnet, dass** in jeder eingestellten x-y-Abtastebene Bilddaten erzeugt werden und dass aus den erzeugen Bilddaten der mehreren x-y-Abtastebenen innerhalb der Probe ein Bildstapel erzeugt wird.

10. Verfahren nach Anspruch 9, **dadurch gekennzeichnet, dass** die Schritte mit einem Scannmikroskop nach einem der Ansprüche 1 bis 7 ausgeführt werden.

## Claims

1. Scanning microscope comprising a microscope objective (1) with an objective housing (5) containing a plurality of lenses (7, 9, 11, 13), **characterized**
**in that** all of the lenses (7, 9, 11, 13) of the microscope objective (1) are held within a single casing (15),
**in that** a helical spring (21) which presses the casing (15) along an optical axis (29) running along the z-direction in the direction of an end position is provided,
**in that** a drive unit, designed as a piezomotor (17), is assigned to the microscope objective (1) and displaces the casing (15) by motor relative to the objective housing (5) in the direction of the optical axis (29), against the resilience of the helical spring (12),
**in that** the piezomotor (17) is arranged within the objective housing (5) of the microscope objective (1),
**in that** the scanning microscope has controls (61) for controlling the piezomotor (17),
**in that**, for scanning a sample (55) in a plurality of x-y scanning planes, the controls (61) control the piezomotor (17) for driving the casing (15) in the z-direction in such a way that an x-y scanning plane to be scanned by the scanning microscope is set,
**in that** the controls (61) control the piezomotor (17) for driving the casing (15) in the z-direction in such a way that, after selecting a further x-y scanning plane to be scanned by the scanning microscope, this further x-y scanning plane is set, and
**in that** the controls (61) comprise an autofocus system for automatically focussing the microscope objective (1) onto the sample (55) to be scanned.

2. Scanning microscope according to Claim 1,
**characterized in that** a turret (3) into which the microscope objective is screwed is provided.

3. Scanning microscope according to one of the preceding claims, **characterized in that** a position detector (23) which acquires the current position of the casing (15) or at least of one lens (7, 9, 11, 13) is provided.

4. Scanning microscope according to Claim 3 in combination with Claim 2, **characterized in that** the position detector (23) is arranged in the microscope objective (1) and the acquired position of the casing (15) or the acquired position of the lens (7, 9, 11, 13) is transmitted to the controls (61) via a contact point (25) in the turret (3).

5. Scanning microscope according to one of the preceding claims, **characterized in that** the scanning in the z-direction is synchronized with the scanning mechanism which effects the scanning in the x-direction and the y-direction.

6. Scanning microscope according to one of the preceding claims, **characterized in that** the controls (61) set a different z-position when scanning in the image border area than in the image centre in order to compensate for imaging errors of the microscope objective (1), in particular the image-flattening errors of the microscope objective (10.

7. Scanning microscope according to one of the preceding claims, **characterized in that** the scanning microscope is a confocal scanning microscope.

8. Method for imaging a sample with the aid of a scanning microscope, **characterized by** the following steps:
- focussing on the sample (55) with the aid of the autofocus of a microscope objective (1) using controls (61) comprising an autofocus system, a piezomotor, arranged within the objective hosing (5) of the microscope objective (1), being actuated with the aid of the controls (61) for displacing a microscope objective (1) by motor; the microscope objective (1) being provided with a single casing (15) which holds all of the lenses (7, 9, 11, 13) of the microscope objective (1); the casing (15) being pressed along an optical axis (29) running in the z-direction in the direction of an end position with the aid of a helical spring (21); and the casing (15) being displaced by motor in the direction of the optical axis (29), against the resilience of the helical spring (12) with the aid of the piezomotor,
- selecting an x-y scanning plane,
- setting the x-y scanning plane by the controls (61),
- scanning the sample (55) within the set x-y scanning plane and generating image data, and
- setting the next x-y scanning plane by the controls (61) after the scanning of the previous x-y scanning plane has been completed, the casing (15) being displaced in the z-direction with the aid of the piezomotor (17) for setting the next x-y scanning plane.

9. Method according to Claim 8, **characterized in that** image data are generated in each of the set x-y scanning planes and **in that** an image stack is generated from the generated image data of the plurality of x-y scanning planes within the sample.

10. Method according to Claim 9, **characterized in that** the steps are carried out with a scanning microscope according to one of Claims 1 to 7.

## Revendications

1. Microscope à balayage qui présente :
un objectif (1) de microscope doté d'un boîtier d'objectif (5) qui contient plusieurs lentilles (7, 9, 11, 13),
**caractérisé en ce que**
toutes les lentilles (7, 9, 11, 13) de l'objectif (1) du microscope sont reprises dans une seule douille (15),
un ressort hélicoïdal (21) est prévu et repousse la douille (15) en direction d'une position d'extrémité le long d'un axe optique (29) qui s'étend dans la direction z,
une unité d'entraînement configurée comme moteur piézoélectrique (17) et qui déplace la douille (15) par rapport au boîtier (5) d'objectif en direction de l'axe optique (29) en opposition à la force élastique du ressort hélicoïdal (12) est associée à l'objectif (1) du microscope,
le moteur piézoélectrique (17) est disposé à l'intérieur du boîtier d'objectif (5) de l'objectif (1) du microscope,
le microscope à balayage présente une commande (61) qui commande le moteur piézoélectrique (17),
la commande (61) commande le moteur piézoélectrique (17) qui entraîne la douille (15) dans la direction z pour balayer un échantillon (55) dans plusieurs plans de balayage x-y de manière à régler le plan de balayage x-y qui doit être balayé par le microscope à balayage,
la commande (61) commande le moteur piézoélectrique (17) qui entraîne la douille (15) dans la direction z de telle sorte qu'après sélection d'un autre plan de balayage x-y qui doit être balayé par le microscope à balayage, cet autre plan de balayage x-y est réglé et
la commande (61) contient un système d'autofocalisation qui assure l'autofocalisation de l'objectif (1) du microscope sur l'échantillon (55) à balayer.

2. Microscope à balayage selon la revendication 1, **caractérisé en ce qu'**il présente une tourelle rotative (3) dans laquelle l'objectif (1) du microscope est vissé.

3. Microscope à balayage selon l'une des revendications précédentes, **caractérisé en ce qu'**il présente un détecteur de position (23) qui saisit la position effective de la douille (15) ou d'au moins une lentille (7, 9, 11, 13).

4. Microscope à balayage selon la revendication 3 combinée avec la revendication 2, **caractérisé en ce que** le détecteur de position (23) est disposé dans l'objectif (1) du microscope et **en ce que** la position détectée de la douille (15) ou la position détectée des lentilles (7, 9, 11, 13) sont transmises à la commande (61) par l'intermédiaire d'un emplacement de contact (25) prévu dans la tourelle rotative (3).

5. Microscope à balayage selon l'une des revendications précédentes, **caractérisé en ce que le** balayage en direction z est synchronisé sur le mécanisme de balayage qui assure le balayage dans la direction x et la direction y.

6. Microscope à balayage selon l'une des revendications précédentes, **caractérisé en ce que** lors du balayage d'une bordure d'image, la commande (61) ajuste une autre position z qu'au milieu de l'image pour compenser les défauts de formation d'image de l'objectif (1) du microscope et de préférence les défauts de planéité d'image de l'objectif (1) du microscope.

7. Microscope à balayage selon l'une des revendications précédentes, **caractérisé en ce que** le microscope à balayage est un microscope à balayage confocal.

8. Procédé de formation d'image d'un échantillon à l'aide d'un microscope à balayage **caractérisé par** les étapes suivantes:
- à l'aide de l'autofocalisation, focalisation de l'objectif (1) du microscope sur l'échantillon (55) en recourant à une commande (61) qui comprend un système d'autofocalisation, un moteur piézoélectrique (17) qui déplace de manière motorisée l'objectif (1) du microscope et disposé à l'intérieur du boîtier d'objectif (5) de l'objectif (1) du microscope étant commandé à l'aide de la commande (61), l'objectif (1) du microscope étant doté d'une seule douille (15) dans laquelle toutes les lentilles (7, 9, 11, 13) de l'objectif (1) du microscope sont reprises, la douille (15) étant repoussée à l'aide d'un ressort hélicoïdal (21) en direction d'une position d'extrémité le long d'un axe optique (29) qui s'étend dans la direction z et la douille (15) étant déplacée de manière motorisée à l'aide du moteur piézoélectrique (17) dans la direction de l'axe optique (29) en opposition à la force élastique du ressort hélicoïdal (12),
- sélection d'un plan de balayage x-y,
- ajustement du plan de balayage x-y par la commande (61),
- balayage de l'échantillon (55) à l'intérieur du plan de balayage x-y ainsi ajusté et formation de données d'image et
- réglage du plan de balayage x-y suivant par la commande (61) après que le balayage du plan de balayage x-y précédent est terminé, la douille (15) étant déplacée à l'aide du moteur piézoélectrique (17) dans la direction z pour ajuster le plan de balayage x-y suivant.

9. Procédé selon la revendication 8, **caractérisé en ce que** des données d'image sont formées dans chaque plan de balayage x-y ajusté et **en ce qu'**un empilement d'images est formé à partir des données d'image ainsi formées dans les différents plans de balayage x-y à l'intérieur de l'échantillon.

10. Procédé selon la revendication 9, **caractérisé en ce que** ses étapes sont réalisées avec un microscope à balayage selon l'une des revendications 1 à 7.
